# EUROPEAN PATENT APPLICATION

(11) **EP 4 653 867 A1**
(43) Date of publication of application: **26.11.2025**
(21) Application number: 23916649.9
(22) Date of filing: 16.01.2023
(51) Int. Cl.: G01N 33/48

(54) **BIOCHIP MANUFACTURING METHOD AND PRODUCT THEREOF, AND TESTING METHOD USING BIOCHIP**

(71) Applicant: Wang, Chin Hung, Taipei, Taiwan 105 (TW)
(72) Inventor: Wang, Chin Hung, Taipei, Taiwan 105 (TW)
(74) Representative: Meissner Bolte Partnerschaft mbB
(86) International application number: PCT/CN2023/072413
(87) International publication number: WO 2024/152158

(57) **Abstract**

Provided is a method for manufacturing biochip, including: manufacturing a substrate; forming a plurality of observation ports that penetrate the substrate on the substrate; providing a plurality of fixing elements on a bottom surface of the substrate, each the fixing elements surrounding each of the plurality of observation ports; providing a plurality of reaction chips corresponding in position to the plurality of observation ports respectively and disposed at the bottom surface; and fixing the plurality of reaction chips in place using the plurality of fixing elements, respectively. Further provided are a biochip manufactured by the method and a testing method using the biochip.

## Description

### BACKGROUND OF THE INVENTION

### FIELD OF THE INVENTION

The present disclosure relates to a biochip manufacturing method, and more particularly to a biochip manufacturing method through providing a plurality of types of reaction chips on a substrate and fixing the reaction chips in place using fixing elements disposed on the substrate.

### DESCRIPTION OF THE PRIOR ART

Biochips emerged in the 1980s, a period when the miniaturization of products across various electronic industries prompted scientists in related fields such as life sciences and bioinformatics to recognize the potential advancements made possible by miniaturizing biochemical analysis.

Broadly speaking, a biochip is formed from a substrate made of glass, silicon, plastic, or the like such that reaction components for use in sample analysis can be miniaturized and fixed to the substrate using principles of molecular biology, analytical chemistry, and biochemical reactions. The subjects of the aforesaid analysis can include genes, proteins, cellular tissues, and the like. Miniaturization of the reaction components is effective in enhancing the accuracy of analysis results, analysis speed, and analysis integrity and reducing the required amounts of samples and reagents when compared with conventional analytical methods.

Biochips fall into two categories: microarray chips on which biological probes are densely implanted within a small surface area, and microprocessing chips for processing biological samples and conducting reaction analyses. The methods of manufacturing microarray chips are as follows: (1) in situ synthesis, i.e., being directly synthesized on a carrier; and (2) spotting, i.e., placing pre-synthesized probes on a carrier. In situ synthesis is suitable for producing high-density DNA chips, albeit costly and of limited efficiency and scope of application. By contrast, spotting is inexpensive and broadly applicable and thereby suitable for use by academic institutions or general enterprises.

However, existing biochips are difficult to achieve widespread application due to dense distribution, manufacturing difficulties, and high manufacturing cost. Furthermore, special instruments are required for the preservation, use and analysis of the biochips thus manufactured. Therefore, it is necessary to provide a biochip effective in enhancing the accuracy of analysis results, analysis speed, and analysis integrity and reducing the required amounts of samples and reagents when compared with conventional analytical methods while ensuring cost-effectiveness, and a method of manufacturing the biochip.

### SUMMARY OF THE INVENTION

To achieve an objective of the disclosure, the disclosure provides a method for manufacturing biochip, comprising the steps of: manufacturing a substrate; forming a plurality of observation ports that penetrate the substrate on the substrate; providing a plurality of fixing elements on a bottom surface of the substrate, each the fixing elements surrounding each of the plurality of observation ports; providing a plurality of reaction chips corresponding in position to the plurality of observation ports respectively and disposed at the bottom surface; and fixing the plurality of reaction chips in place using the plurality of fixing elements, respectively.

Preferably, the method further entails allowing the plurality of fixing elements to deform to further fix the plurality of reaction chips in place.

Preferably, the plurality of fixing elements are heated to melt and achieve the deformation.

Preferably, the method further entails placing reaction components on a reaction substrate and cutting the reaction substrate into the plurality of reaction chips.

Preferably, each of the reaction chips comprises at least two types of reaction components.

Preferably, a minimum distance between the center of the reaction chips is 1 mm to10 mm.

Preferably, the fixing elements are L-shaped columns, cylinders, polygonal prisms, cones, cylinders, spheres, polyhedral, rings, or combinations thereof.

To achieve another objective of the disclosure, the disclosure further provides a biochip manufactured by the aforesaid method.

Preferably, the observation ports are each surrounded by at least one corresponding fixing elements.

Preferably, the substrate is made of silicon, glass, polymer materials, or ceramics.

Preferably, the fixing elements are made of plastic, silicone, or rubber.

To achieve yet another objective of the disclosure, the disclosure provides a testing method using the biochip thus manufactured. The method comprises the steps of: dispensing a sample onto a reaction chip through an observation port; and observing a result through the observation port.

Owing to the aforesaid technical features, the disclosure can provide a biochip manufacturing method to manufacture biochips that incur low costs, and the method is simple. With reaction chips and fixing elements having been cut in advance, different types of reaction chips can be arranged on one single substrate to achieve different combinations of reaction components as needed, so as to further save manufacturing costs and enhance flexibility of biochip application.

### BRIEF DESCRIPTION OF THE DRAWINGS

In the following detailed description, numerous specific details are set forth to provide a thorough understanding of the disclosed embodiments. It will be apparent to those skilled in the art, however, that one or more embodiments may be implemented without these specific details. In other instances, conventional structures and processes are schematically illustrated to simplify the drawings.
FIG. 1 is a schematic view of the process flow of a biochip manufacturing method according to an embodiment of the disclosure.
FIG. 2 is a schematic view of a substrate for use in the biochip manufacturing method according to the first embodiment of the disclosure.
FIG. 3 is a schematic view of forming observation ports on the substrate for use in the biochip manufacturing method according to the first embodiment of the disclosure.
FIG. 4 is a perspective view of a biochip comprising conical fixing elements according to the first embodiment of the disclosure.
FIG. 5 is a cross-sectional view of the substrate taken along a lateral plane defined by the line A-A' in FIG. 4.
FIG. 6 is a cross-sectional view of a reaction chip disposed on the substrate taken along a lateral plane and adapted for use in the biochip manufacturing method according to the first embodiment of the disclosure.
FIG. 7 is a cross-sectional view of melting the fixing elements to further fix the reaction chip in place in the course of manufacturing a biochip by the method according to the first embodiment of the disclosure.
FIG. 8 is a perspective view of the biochip comprising mushroom-shaped fixing elements according to the second embodiment of the disclosure.
FIG. 9 is a cross-sectional view of the substrate taken along a lateral plane defined by the line B-B' in FIG. 8.
FIG. 10 is a cross-sectional view of a reaction chip disposed on the substrate taken along a lateral plane and adapted for use in the biochip manufacturing method according to the second embodiment of the disclosure.

### DETAILED DESCRIPTION OF THE EMBODIMENTS

The following provides a detailed description of embodiments with reference to the accompanying drawings. However, these embodiments may be implemented in different forms, and this should not be construed as limiting the implementation or application of the claimed specific embodiments. The embodiment encompasses features of a plurality of specific embodiments, as well as the method steps and the sequence thereof for constructing and operating these specific embodiments. However, the same or equivalent functions and sequence of steps may also be implemented in other specific embodiments. On the contrary, these embodiments are intended to provide a thorough and complete disclosure of the present invention, so as to fully convey its spirit to those skilled in the art. On the contrary, these embodiments are intended to provide a thorough and complete disclosure of the present invention, so as to fully convey its spirit to those skilled in the art. Like reference numerals used in the accompanying drawings denote like components. Conventional functions or structures are not described in detail in the following description to avoid reiterating unnecessary details of the embodiments.

Unless otherwise defined, all technical terms and terminology used herein shall have the same meanings as commonly understood by persons skilled in the art. In the event of a conflict, this specification, including the definitions, shall prevail.

Every singular noun used herein can encompass the plural form of the noun, and vice versa, provided that doing so does not render the context contradictory. The expressions "at least one" and "one or more" used herein and used in the claims have the same meaning, and both mean one, two, three or more.

Although all parameters and numerical value ranges for defining wide scope of the disclosure are approximations, related numerical values are stated as precisely as possible in specific embodiments. However, intrinsically, every numerical value inevitably comes with some errors arising from a standard deviation associated with individual testing methods. The adverb "approximately" used hereunder usually means that the difference between an actual numerical value and a specific numerical value or range is less than 10%, 5%, 1% or 0.5%. Alternatively, the adverb "approximately" used hereunder means that an actual numerical value differs from the mean by an acceptable standard deviation or less, and the standard deviation is defined by persons skilled in the art. Apart from the embodiments, or unless otherwise specified, all numerical ranges, quantity, numerical values, and percentages (for example, descriptive of the amount of a material used, time period, temperature, operation conditions, quantitative proportion, and the like) used hereunder shall be interpreted in a manner to mean that they are modified with the adverb "approximately". Therefore, unless otherwise specified, all numerical parameters disclosed hereunder and disclosed in the claims are approximations and are subject to changes as needed. At the very least, the numerical parameters must be interpreted as numerical values characterized by significant figures and obtained by a general carry system. In this regard, a numerical value range is expressed as starting from an endpoint and ending at another endpoint or as lying between two endpoints. Unless otherwise specified, every numerical value range includes endpoints.

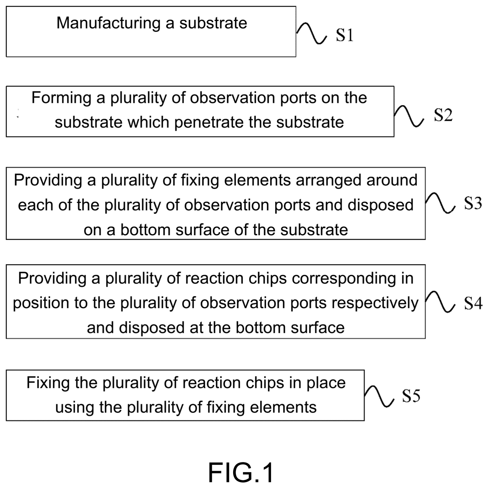

Referring to FIG. 1, there is shown a schematic view of the process flow of a biochip manufacturing method according to an embodiment of the disclosure.

An embodiment of the disclosure provides a biochip manufacturing method, comprising the steps of:
S1: manufacturing a substrate,
S2: forming a plurality of observation ports on the substrate to penetrate the substrate,
S3: providing a plurality of fixing elements arranged around each of the plurality of observation ports and disposed on a bottom surface of the substrate,
S4: providing a plurality of reaction chips corresponding in position to the plurality of observation ports respectively and disposed at an end of the bottom surface, and
S5: fixing the plurality of reaction chips in place using the plurality of fixing elements, respectively.

According to another embodiment of the disclosure, after providing the plurality of reaction chips on the bottom surface of the substrate, the method further comprises the step of melting the fixing elements to allow the reaction chips to be rigidly fixed to the bottom surface of the substrate. A means for melting the fixing elements includes but is not limited to heating or any means for deforming the fixing elements to prevent detachment of the reaction chips. For instance, heating a metal sheet and then pressing the heated metal sheet flat against the fixing elements to thermally flatten them. According to another embodiment aspect of the disclosure, after providing the plurality of reaction chips on the bottom surface of the substrate, the method further comprises the step of fixing the reaction chips in place using resin or by bonding to enhance the stability or sealability of the reaction chips.

According to an embodiment of the disclosure, the biochip manufacturing method further comprises the step of placing reaction components (for example, biological probes) on a reaction substrate and cutting the reaction substrate into the plurality of reaction chips. The reaction substrate is made of paper or plastic, preferably plastic, and is resilient and easy to put in place. The techniques of installing the reaction components on the reaction substrate include photomask-based technique, dot-matrix-based technique, inkjet-based technique, and piezoelectric-style technique and can be used as needed. Techniques of cutting the reaction substrate include using a model cutter capable of cutting or laser cutting and are adjustable to meet the demand for different types of biological probes.

According to an embodiment of the disclosure, each of the reaction chips is in the shape of a circle, square, rectangle, or hexagon in an adjustable manner as needed, preferably circular in shape. According to an embodiment of the disclosure, each reaction chip is circular in shape, with a diameter of 1 to 3 mm, preferably 1.5 mm. According to another embodiment of the disclosure, each of the reaction chips is in the shape of a square, with a side length of 1 to 3 mm, preferably 1.5 mm.

According to an embodiment of the disclosure, the fixing elements are L-shaped columns, cylinders, polygonal prisms, cones, cylinders, spheres, polyhedral, rings, or combinations thereof. Preferably, the fixing elements are cones. According to another embodiment of the disclosure, the contact portion of the fixing elements with the bottom surface of the substrate can be a cylinder or a polygonal prism, while the portion not in contact with the substrate can be a sphere or a polyhedron.

According to an embodiment of the disclosure, the reaction components are protein probes (e.g., antigens or antibodies) or nucleic acid probes (e.g., DNA or RNA probes), but the disclosure is not limited thereto. Persons skilled in the art can install reaction components required or desired for use according to common knowledge pertaining to related fields. With different reaction components (reaction chips) being disposed on one single biochip, tests to be conducted on the same sample or a plurality of samples at different stages can be integrated onto the same biochip to enable users to easily customize the desired reactions to be performed on a single biochip and observe a result.

Therefore, a biochip is manufactured by the aforesaid method. According to an embodiment of the disclosure, an observation port on the biochip is surrounded by at least one fixing element, preferably, four fixing elements. In another aspect, the substrate for the biochip is made of silicon, glass, polymer materials, or ceramics, preferably polymer materials (for example, plastic). According to an embodiment of the disclosure, the fixing elements are made of plastic, silicone, or rubber. All materials, preferably plastics, that are conducive to a shaping process and can be disposed on the substrate are suitable for the fixing elements. According to another embodiment of the disclosure, after the reaction chips have been disposed on the fixing elements, the fixing elements deform to further fix the reaction chips in place; for example, the fixing elements are either heated to melt and deform, or compressed to deform.

An embodiment of the disclosure provides a testing method with the biochip manufactured by the aforesaid method, comprising dispensing a sample onto an observation port from the side opposing the bottom surface having the fixing elements to allow the sample to come into contact with the reaction chips to initiate the reaction, and the results can be observed through the observation port, either with the naked eye or with the aid of instruments.

A biochip manufacturing method, a biochip manufactured by the method, and a testing method using the biochip, as provided according to the disclosure, are illustrated by specific embodiments and accompanying drawings and described below.

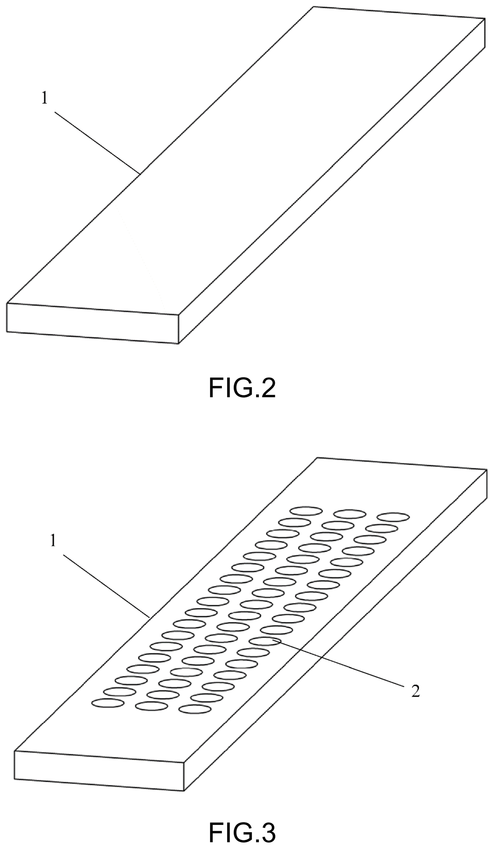

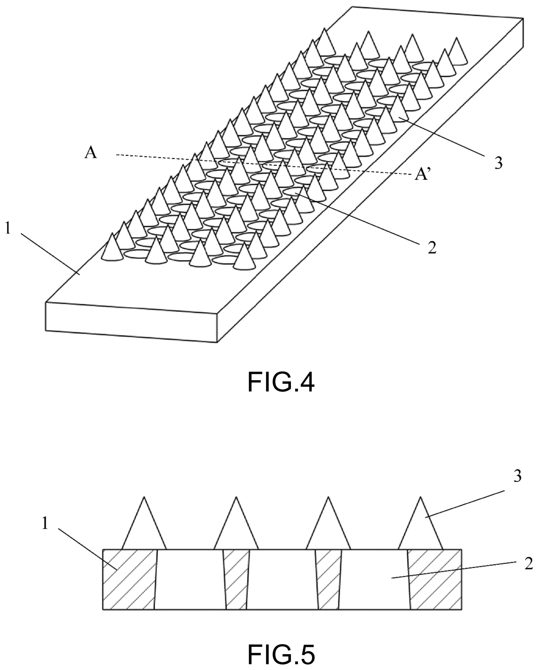

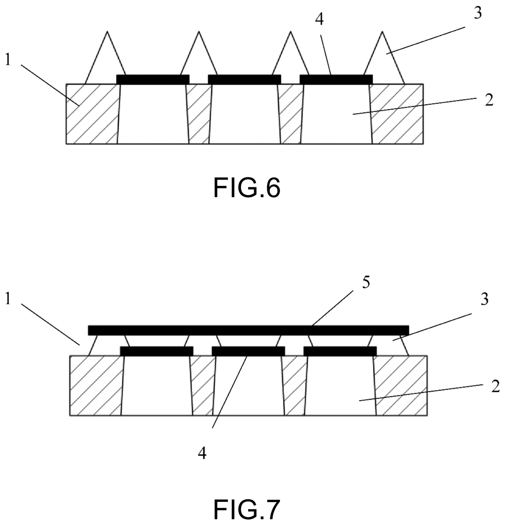

Refer to FIG. 2 through FIG. 6. FIG. 2 is a schematic view of a substrate for use in the biochip manufacturing method according to the first embodiment of the disclosure. FIG. 3 is a schematic view of forming observation ports on the substrate for use in the biochip manufacturing method according to the first embodiment of the disclosure. FIG. 4 is a perspective view of a biochip comprising conical fixing elements according to the first embodiment of the disclosure. FIG. 5 is a cross-sectional view of the substrate taken along a lateral plane defined by the line A-A' in FIG. 4. FIG. 6 is a cross-sectional view of a reaction chip disposed on the substrate taken along a lateral plane and adapted for use in the biochip manufacturing method according to the first embodiment of the disclosure. FIG. 7 is a cross-sectional view of melting the fixing elements to further fix the reaction chip in place while manufacturing a biochip by the method according to the first embodiment of the disclosure.

According to the first embodiment of the disclosure, the method comprises the step of preparing a substrate 1 shown in FIG. 2. In the first embodiment, the substrate 1 is made of plastic. As shown in FIG. 3, a plurality of observation ports 2 are formed on the substrate 1 and configured to penetrate the substrate 1. In the first embodiment, the observation ports 2 have a diameter of 1.1 mm each, and any two adjacent ones of the observation ports 2 are spaced apart by a distance of 1.54 mm.

As shown in FIG. 4, the front surface of the substrate 1 faces downward, and the bottom surface of the substrate 1 faces upward. In the first embodiment, a plurality of fixing elements 3, each conical in shape, are formed on the bottom surface of the substrate 1 and made of plastic. Samples are dispensed onto the front surface of the biochip; thus, each of the observation ports 2 is designed to be narrow at the top and wide at the bottom to facilitate sample addition as shown in FIG. 4. In addition to the advantage of facilitating sample addition, the aforesaid technical feature being narrow at the top and wide at the bottom, which prevents the reaction chip 4 from falling into the observation ports 2 in the course of positioning a reaction chip 4. In the first embodiment, each of the observation ports 2 has an inner diameter (on the bottom surface) of 1.1 mm and an outer diameter (on the front surface) of 1.2 mm, while the center-to-center distance is 1.54 mm between the observation ports 2 in the same column or row and 1.54 mm between the conical fixing elements 3 in the same column or row. The substrate 1, on which the conical fixing elements 3 are disposed, is shown in FIG. 5.

Referring to FIG. 6, the reaction chip 4 is disposed on the bottom surface of the substrate 1. In the first embodiment, the reaction chip 4 is a circular slice with a diameter of 1.4 mm, made of plastic, and the reaction components placed thereon are protein probes. After the reaction chip 4 has been mounted in place, the tip of the conical fixing elements 3 made of plastic is melted and flattened using an iron to produce a fixing portion 5 shown in FIG. 7, allowing the reaction chip 4 to be fixed in place between the four conical fixing elements 3 as well as between the fixing portion 5 and the substrate 1.

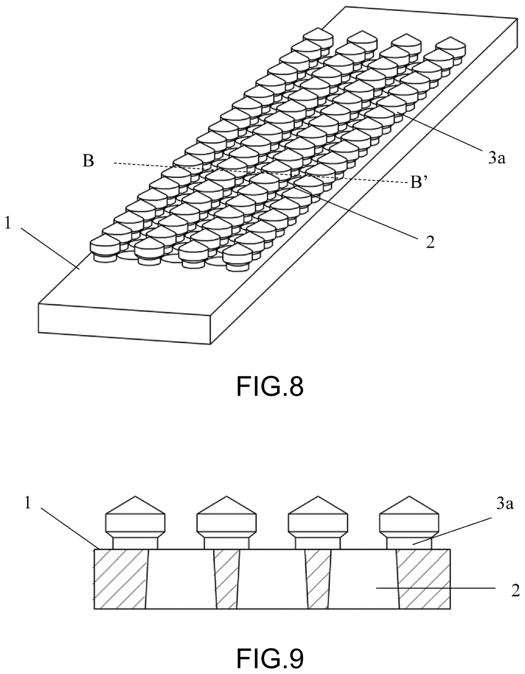

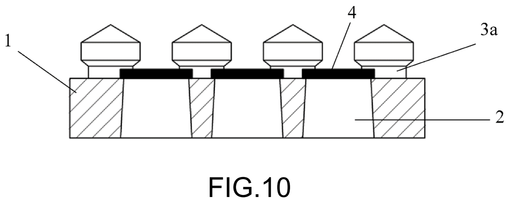

The second embodiment of the disclosure is illustrated by FIG. 8 through FIG. 10 and described below. FIG. 8 is a perspective view of the biochip comprising mushroom-shaped fixing elements according to the second embodiment of the disclosure. FIG. 9 is a cross-sectional view of the substrate taken along a lateral plane defined by the line B-B' in FIG. 8. FIG. 10 is a cross-sectional view of a reaction chip disposed on the substrate taken along a lateral plane and adapted for use in the biochip manufacturing method according to the second embodiment of the disclosure.

The same procedure of the biochip manufacturing method according to the second embodiment the first embodiment of the disclosure is omitted. The difference thereof is that the fixing elements 3a are mushroom-shaped, as shown in FIGS. 8 and 9. The shape of the mushroom-shaped fixing elements 3a allows the reaction chip 4 to be easily inserted and secured between them. In the second embodiment, the reaction chip 4 is made of plastic that is slightly resilient. The biochip with the reaction chip 4 installed is shown in FIG. 10.

The substrate, the observation ports and the fixing elements in the third embodiment of the disclosure are the same as their counterparts in the first and second embodiments. The differences thereof are: in the third embodiment, biological probes are disposed on the paper-based reaction substrate by inkjet printing method, and then the reaction substrate is laser-cut into a circular shape with a diameter of 1.4 mm to form the reaction chip 4. Next, a positioning machine adsorbs the rear side of the reaction chip 4, which has no biological probes, and places the reaction chip 4 between the fixing elements 3 and 3a for fixation. At this point in time, different types of reaction chips 4 are disposed on the same biochip according to experimental needs, reducing costs. According to an embodiment aspect of the disclosure, after each fixing element 3 has been flattened to form the fixing portion 5, they become tightly fitted to each other, hermetically sealing the reaction chips 4 between the fixing portion 5 and the substrate 1. At this point in time, when observing a result through the observation ports 2, the users can observe the result using an external light source from the front surface of the substrate 1. According to another embodiment aspect of the disclosure, after each fixing element 3 has been flattened to form the fixing portion 5, they are not tightly fitted to each other; at this point in time, when observing a result through the observation ports 2, the users can observe the result using an applied light source from the bottom surface of the substrate 1.

The fourth embodiment of the disclosure provides a testing method using the biochip thus manufactured. In the fourth embodiment, the front surface of the biochip manufactured in the aforesaid embodiments faces upward, and the samples are manually or automatically applied to the biochip. Upon completion of a reaction between each of the samples and a corresponding one of the biological probes, the result is analyzed with the naked eye or a machine.

Owing to the aforesaid technical features, the biochip manufacturing method according to the disclosure is effective in fixing a reaction chip in place using simple fixing elements, achieving positioning during manufacturing by adsorbing the rear surface of the reaction chip, and avoiding damage to biological probes that would occur if the front surface of the reaction chip is adsorbed, as in conventional processes. The biochip thus manufactured incurs low costs and comes with the reaction chip having different reaction components as needed to further cut costs. For instance, two or over three types of reaction chips having different biological probes (and reaction components) are placed on the same biochip. The experimental procedure of the testing method using the disclosed biochip is easy to operate, and the result analysis is straightforward, making it easier to use than conventional examination methods. Since the biochip of the disclosure is moderately sized, it is feasible to use only a portion of the reaction chips as needed, thereby saving costs.

Although the disclosure is disclosed above by preferred embodiments, the preferred embodiments are illustrative rather than restrictive of the disclosure. Equivalent changes and modifications made by persons skilled in the art to the preferred embodiments without departing from the spirit and scope of the disclosure must be deemed to fall within the scope defined by the appended claims.

## Claims

1. A method for manufacturing biochip, **characterized in that**, comprising the steps of:
manufacturing a substrate;
forming a plurality of observation ports that penetrate the substrate on the substrate;
providing a plurality of fixing elements on a bottom surface of the substrate, each the fixing elements surrounding each of the plurality of observation ports;
providing a plurality of reaction chips corresponding in position to the plurality of observation ports respectively and disposed at the bottom surface; and
fixing the plurality of reaction chips in place using the plurality of fixing elements, respectively.

2. The method of claim 1, **characterized in that**, further comprising the step of allowing the plurality of fixing elements to deform to fix the plurality of reaction chips in place.

3. The method of claim 2, **characterized in that**, the plurality of fixing elements are heated to melt and achieve the deformation.

4. The method of claim 1, **characterized in that**, further comprising the step of placing reaction components on a reaction substrate and cutting the reaction substrate into the plurality of reaction chips.

5. The method of claim 1, **characterized in that**, wherein the reaction chips disposed on the bottom surface comprises different reaction components.

6. The method of claim 5, **characterized in that**, wherein a minimum distance between the center of each the reaction chips is 1 mm to 10 mm.

7. The method of claim 1, **characterized in that**, wherein the fixing elements are L-shaped columns, cylinders, polygonal prisms, cones, cylinders, spheres, polyhedral, rings, or combinations thereof.

8. A biochip, manufactured by the method of any one of claims 1-7.

9. The biochip of claim 8, **characterized in that**, wherein the observation ports are each surrounded by at least one corresponding fixing elements.

10. The biochip of claim 8, **characterized in that**, wherein the substrate is made of silicon, glass, polymer materials, or ceramics.

11. The biochip of claim 8, **characterized in that**, wherein the fixing elements are made of plastic, silicone, or rubber.

12. A testing method using the biochip of any one of claims 8-11, **characterized in that**, comprising the steps of:
dispensing a sample onto a reaction chip through an observation port; and
observing a result through the observation port.
